# EUROPÄISCHE PATENTSCHRIFT

(11) **EP 4 388 227 B1**
(45) Veröffentlichungstag und Bekanntmachung des Hinweises auf die Patenterteilung: **13.08.2025**
(21) Anmeldenummer: 22751083.1
(22) Anmeldetag: 18.07.2022
(51) Int. Cl.: F16H 57/025, F03D 80/50

(54) **MONTAGE- UND DEMONTAGEVORRICHTUNG**
ASSEMBLING AND DISSEMBLING DEVICE
DISPOSITIF DE MONTAGE ET DE DÉMONTAGE

(30) Priorität: 17.08.2021 DE 102021208984
(43) Veröffentlichungstag der Anmeldung: 26.06.2024
(73) Patentinhaber: ZF Friedrichshafen AG, 88046 Friedrichshafen (DE)
(72) Erfinder: DE LAET, Wim, 2000 Antwerpen (BE); MICHIELSEN, Wim, 88046 Friedrichshafen (DE); GAETHOFS, Quinten, 88046 Friedrichshafen (DE); SPERLICH, Ralf, 58452 Witten (DE)
(74) Vertreter: ZF Friedrichshafen AG
(86) Internationale Anmeldenummer: PCT/EP2022/070027
(87) Internationale Veröffentlichungsnummer: WO 2023/020757

(56) Entgegenhaltungen:
- EP-A1- 3 150 849
- US-A1- 2018 335 023
- US-A1- 2019 277 393
- US-A1- 2020 362 824

## Beschreibung

Die Erfindung betrifft eine Anordnung nach dem Oberbegriff von Anspruch 1, ein Verfahren nach Anspruch 3 und ein Verfahren nach Anspruch 5.

Aus EP 3 150 849 A1 ist eine Vorrichtung bekannt, mit der sich der Antriebsstrang einer Windkraftanlage zu Reparatur- und Wartungszwecken in der Gondel verschieben lässt. Der Antriebsstrang wird dabei mit hydraulischen Führungsankern auf Schienen verfahren. Auch US 2020/362824 beschreibt eine Vorrichtung gemäß Anspruch 1.

Der Erfindung liegt die Aufgabe zugrunde, die Reparatur und Wartung des Antriebsstrangs einer Windkraftanlage zu vereinfachen. Diese Aufgabe wird gelöst durch eine Anordnung nach Anspruch 1, ein Verfahren nach Anspruch 3 und ein Verfahren nach Anspruch 5. Bevorzugte Weiterbildungen sind in den Unteransprüchen enthalten und ergeben sich aus nachfolgender Beschreibung.

Die erfindungsgemäße Anordnung umfasst einen ersten Gehäuseteil und einen zweiten Gehäuseteil. Die beiden Gehäuseteile bilden jeweils ein- oder mehrstückig mit einem oder mehreren weiteren Gehäuseteilen ein Gehäuse, etwa ein Getriebegehäuse oder ein Generatorgehäuse. Sie können Teil desselben Gehäuses sein oder zu unterschiedlichen Gehäusen gehören. So kann es sich etwa um Teile eines Getriebegehäuses, um Teile eines Generatorgehäuses oder um einen Teil eines Getriebegehäuses und einen Teil eines Generatorgehäuses handeln. Das Getriebe und der Generator gehören bevorzugt zum Antriebsstrang einer Windkraftanlage.

Die Anordnung umfasst darüber hinaus einen ersten Führungsanker, einen zweiten Führungsanker und mindestens eine Führungsschiene. Die Führungsanker bezeichnen Mittel, zur Führung des ersten Gehäuseteils oder des zweiten Gehäuseteils in der Führungsschiene. Die Führungsschiene wiederum ist ein längliches Bauteil, das geeignet ist, die Führungsanker zu führen. Insbesondere kann es sich um ein einstückiges Bauteil handeln, dessen Querschnitt entlang des Verlaufs der Führungsschiene unveränderlich ist. Vorzugsweise verläuft die Führungsschiene bezüglich des Antriebsstrangs axial, das heißt parallel zu einer Längsachse des Antriebsstrangs. Die Längsachse des Antriebsstrangs stimmt überein mit den Drehachsen der Wellen des Antriebsstrangs. Als Führungsschiene eignet sich beispielsweise ein Doppel-T-Profil.

Die Führungsanker greifen formschlüssig und verschiebbar in die Führungsschiene ein. Insbesondere lassen sich die Führungsanker in Längsrichtung der Führungsschiene, das heißt entlang ihres Verlaufs verschieben. Orthogonal dazu sind die Führungsanker vorzugsweise durch den Formschluss unverschiebbar fixiert.

Erfindungsgemäß ist der erste Führungsanker starr, das heißt ohne die Möglichkeit einer Relativbewegung, an dem ersten Gehäuseteil fixiert, wobei der zweite Führungsanker starr an dem zweiten Gehäuseteil fixiert ist. Durch die starre Fixierung der Führungsanker ergibt sich eine definierte Position der beiden Gehäuseteile orthogonal zur Längsrichtung der Führungsschiene bzw. in radialer Richtung. Insbesondere ist dadurch die Position der beiden Gehäuseteile relativ zueinander orthogonal zur Längsrichtung der Führungsschiene bzw. in radialer Richtung festgelegt. Dadurch lässt sich die Führungsschiene als Positionierhilfe zur Montage oder Demontage der beiden Gehäuseteile nutzen. Durch die starre Ausgestaltung der Führungsanker gestaltet sich der Aufbau und die Handhabung der erfindungsgemäßen Anordnung vergleichsweise einfach.

Da die Führungsanker starr ausgeführt sind, können sie als einfache einstückige Bauteile ausgeführt sein. Im Hinblick auf eine einfache Verschiebbarkeit in der Führungsschiene sind sie bevorzugt mit Rollen in der Führungsschiene gelagert.

Die Fixierung der Führungsanker an dem jeweiligen Gehäuseteil ist vorzugsweise lösbar, sodass die Führungsanker nach erfolgter Montage entfernt werden können. So können die Führungsanker etwa mit dem jeweiligen Gehäuseteil verschraubt sein.

Es ist möglich, mehrere Führungsschienen zu verwenden. Dadurch verbessert sich die Positioniergenauigkeit. In einer bevorzugten Weiterbildung ist hingegen nur genau eine Führungsschiene vorgesehen, in der die beiden Gehäuseteile über die Führungsanker formschlüssig und verschiebbar fixiert sind. Weiterbildungsgemäß sind also die beiden Gehäuseteile jeweils mittels einer oder mehrere starr in dem jeweiligen Gehäuseteil fixierter Führungsanker formschlüssig und verschiebbar in genau einer Führungsschiene fixiert. Dies bedeutet, dass gibt es keine weitere Führungsschiene, in der die beiden Gehäuseteile mittels starr in dem jeweiligen Gehäuseteil fixierter Führungsanker formschlüssig und verschiebbar fixiert sind. Durch die genau eine Führungsschiene ergibt sich eine besonders einfache Handhabbarkeit der Anordnung.

Die Führungsschiene dient bevorzugt ausschließlich der Positionierung der beiden Gehäuseteile, nicht aber dazu, die Gehäuseteile zu tragen. In dem Fall wird die Führungsschiene entsprechend der Erfindung mindestens teilweise, vorzugsweise vollständig, durch die Führungsanker gestützt. Die Führungsanker nehmen mindestens einen Teil der Gewichtskraft der Führungsschiene, vorzugsweise die gesamte Gewichtskraft der Führungsschiene auf. Die Gewichtskraft der Führungsschiene leiten die Führungsanker also mindestens teilweise, bevorzugt vollständig in die beiden Gehäuseteile ein. Weiterbildungsgemäß tragen also die beiden Gehäuseteile die Führungsschiene mindestens teilweise, bevorzugt vollständig.

Durch die Erfindung entfällt die Notwendigkeit, die Führungsschiene in einer Tragstruktur, etwa in der Gondel einer Windkraftanlage, zu fixieren. Da die Führungsschiene die Gehäuseteile nicht tragen muss, kann sie Führungsschiene zudem weniger stabil und entsprechend leichter ausgeführt sein.

Der erste Führungsanker, der zweite Führungsanker und die Führungsschiene bilden eine erfindungsgemäße Montage- und Demontagevorrichtung.

Ein erfindungsgemäßes Verfahren zur Montage oder Demontage der erfindungsgemäßen Anordnung oder einer bevorzugten Weiterbildung sieht vor, dass die Führungsanker an dem jeweiligen Gehäuseteil fixiert werden. Der erste Führungsanker wird also an dem ersten Gehäuseteil fixiert. Entsprechend wird der zweiten Führungsanker an dem zweiten Gehäuseteil fixiert. Zuvor, zugleich oder im Anschluss daran werden die Führungsanker formschlüssig mit der Führungsschiene in Eingriff gebracht. Schließlich werden der erste Führungsanker und/oder der zweite Führungsanker in der Führungsschiene verschoben. Aufgrund der Fixierung der Führungsanker in den Gehäuseteilen geht dies einher mit einer Verschiebung des ersten Gehäuseteils und/oder des zweiten Gehäuseteils.

In einer bevorzugten Weiterbildung des Verfahrens werden der erste Gehäuseteil und/oder der zweite Gehäuseteil nicht von der Führungsschiene gehalten, sondern von einer separaten Hebe- oder Handhabungsvorrichtung. Als Hebe- oder Handhabungsvorrichtung kommt etwa ein Kran zum Einsatz.

Ein erfindungsgemäßes Verfahren zur Fertigung eines Gehäuseteils für eine erfindungsgemäße Anordnung oder eine bevorzugte Weiterbildung, das heißt zur Fertigung des oben beschriebenen ersten Gehäuseteils oder zweiten Gehäuseteils, sieht vor, dass eine Aufnahme für den jeweiligen Führungsanker und eine Aufnahme für ein weiteres Mittel in derselben Aufspannung gefertigt werden. Dies impliziert, dass der Gehäuseteil mindestens eine Aufnahme für einen Führungsanker und mindestens eine Aufnahme für das weiteres Mittel aufweist.

Die Aufnahme für den Führungsanker bezeichnet eine Fixiervorrichtung für den Führungsanker. Der Führungsanker lässt sich also in der Aufnahme starr an dem Gehäuseteil fixieren.

Die Aufnahme für das weitere Mittel bezeichnet eine Fixiervorrichtung für das weitere Mittel. Bei dem weiteren Mittel kann es sich etwa um ein Lager, ein Zahnrad, beispielsweise ein Hohlrad eines Planetengetriebes, oder ein weiteres Gehäuseteil handeln.

Um das Gehäuseteil zu fertigen, wird es auf einer Fertigungsmaschine aufgespannt. Ohne die Aufspannung zu lösen, werden die Aufnahme für den Führungsanker und die Aufnahme für das weitere Mittel gefertigt. Insbesondere können beide Aufnahmen mit derselben Maschine gefertigt werden.

Durch die erfindungsgemäße Fertigung in derselben Aufspannung ist es möglich, die Position der Aufnahme für den Führungsanker und relativ zu dem weiteren Mittel besonders präzise zu fertigen. Dies wiederum hat den Vorteil einer besonders präzisen Positionierung der Gehäuseteile relativ zu der Führungsschiene und damit auch relativ zueinander.

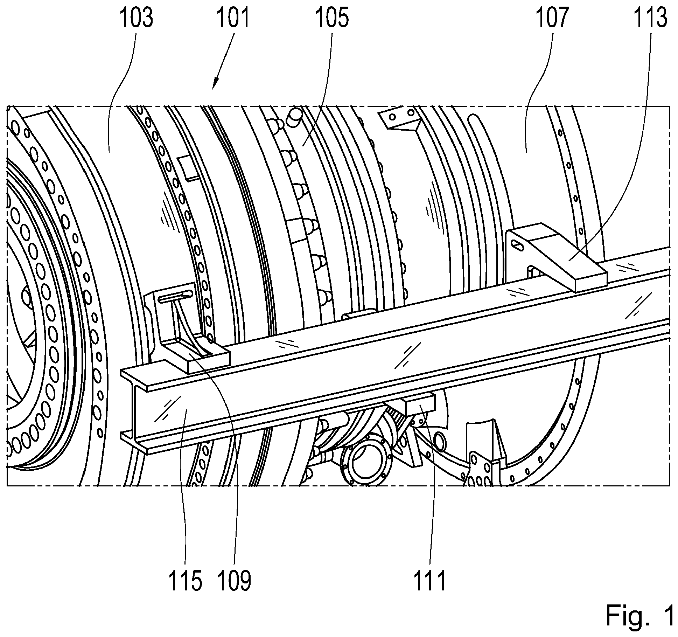

Ein bevorzugtes Ausführungsbeispiel der Erfindung ist in Fig. 1 dargestellt. Im Einzelnen zeigt:
Fig. 1 eine Positioniervorrichtung für Gehäuseteile.

In Figur 1 ist ein Getriebegehäuse 101 einer Windkraftanlage dargestellt. Dessen Gehäuse umfass mehrere miteinander verschraubte Gehäuseteile - einen ersten Gehäuseteil 103, einen zweiten Gehäuseteil 105 und einen dritten Gehäuseteil 107.

An dem ersten Gehäuseteil 103 ist ein erster Führungsanker 109 angebracht. Entsprechend sind an dem zweiten Gehäuseteil 105 ein zweiter Führungsanker 111 und an dem dritten Gehäuseteil 107 ein dritter Führungsanker 113 angebracht. Alle drei Führungsanker 109, 111, 113 greifen formschlüssig in eine Führungsschiene 115 ein. Dadurch lässt sich das Gehäuse 101 entlang der Führungsschiene 115, orthogonal zur Längsrichtung der Führungsschiene 115 verschieben. Eine Position der Gehäuseteile 103, 105, 107 orthogonal zur Längsrichtung der Führungsschiene 115 ist dabei durch den jeweiligen Führungsanker 109, 111, 113 definiert. Diese Position ist unveränderlich und unabhängig von der Position des jeweiligen Gehäuseteils 103, 105, 107 relativ zu der Führungsschiene 115 in deren Längsrichtung.

Soll das Getriebe 101 mit einem Generator verblockt werden, wird ein Gehäuse des Generators analog zu dem Gehäuse des Getriebes mit Führungsankern versehen, die formschlüssig in die Führungsschiene 115 eingreifen. Durch die Führungsschiene 115 werden dann das Gehäuse des Getriebes und das Gehäuse des Generators relativ zueinander so positioniert, sodass sie in Längsrichtung der Führungsschiene 115 zusammengeschoben und verschraubt werden können. Auch lassen sich das Getriebe und der Generator mittels der Führungsschiene 115 durch Verschiebung in Gegenrichtung zu Wartungs- und Reparaturzwecken voneinander trennen.

### Bezugszeichen

- 101: Getriebe
- 103: erster Gehäuseteil
- 105: zweiter Gehäuseteil
- 107: dritter Gehäuseteil
- 109: erster Führungsanker
- 111: zweiter Führungsanker
- 113: dritter Führungsanker
- 115: Führungsschiene

## Patentansprüche

1. Anordnung mit einem Gehäuseteil (103), einem zweiten Gehäuseteil (105), einem ersten Führungsanker (109), einem zweiten Führungsanker (111) und mindestens einer Führungsschiene (115); wobei
die Führungsanker (109, 111) formschlüssig und verschiebbar in die Führungsschiene (115) eingreifen; und wobei
der erste Führungsanker (103) starr an dem ersten Gehäuseteil (103) und der zweite Führungsanker (111) starr an dem zweiten Gehäuseteil (105) fixiert ist; **dadurch gekennzeichnet, dass**
die Führungsanker (109, 111) mindestens einen Teil der Gewichtskraft der Führungsschiene (115) aufnehmen und in die beiden Gehäuseteile (103, 105) einleiten.

2. Anordnung nach Anspruch 1; **gekennzeichnet durch**
genau eine Führungsschiene (115).

3. Verfahren zur Montage oder Demontage einer Anordnung nach einem der Ansprüche 1 oder 2; mit den Schritten
- fixieren der Führungsanker (109, 111) an dem jeweiligen Gehäuseteil (103, 105);
- in Eingriff bringen der Führungsanker (109, 111) mit der Führungsschiene (115); und
- verschieben des ersten Führungsankers (109) und/oder des zweiten Führungsankers (111) in der Führungsschiene (115).

4. Verfahren nach dem vorhergehenden Anspruch; **dadurch gekennzeichnet, dass** das erste Gehäuseteil (103) und/oder das zweite Gehäuseteil (105) von einer Hebe- oder Handhabungsvorrichtung gehalten werden.

5. Verfahren zur Fertigung eines Gehäuseteils (103, 105) für eine Anordnung nach einem der Ansprüche 1 oder 2; **dadurch gekennzeichnet, dass** eine Aufnahme für einen Führungsanker (109, 111) und eine Aufnahme für mindestens ein weiteres Mittel in derselben Aufspannung gefertigt werden.

## Claims

1. An arrangement with a housing part (103), a second housing part (105), a first guide anchor (109), a second guide anchor (111), and at least one guide track (115), wherein
the guide anchors (109, 111) engage positively and displaceably in the guide track (115), and wherein
the first guide anchor (103) is rigidly fixed to the first housing part (103), and the second guide anchor (111) is rigidly fixed to the second housing part (105), **characterized in that**
the guide anchors (109, 111) absorb at least part of the weight force of the guide track (115) and transmit it into the two housing parts (103, 105).

2. The arrangement according to claim 1, **characterized by** exactly one guide track (115).

3. A method for assembling or disassembling an arrangement according to any of claims 1 or 2, with the steps
- fixing the guide anchors (109, 111) to the respective housing part (103, 105);
- bringing the guide anchors (109, 111) into engagement with the guide track (115); and
- moving the first guide anchor (109) and/or the second guide anchor (111) in the guide track (115).

4. The method according to the preceding claim, **characterized in that** the first housing part (103) and/or the second housing part (105) is held by a lifting or handling device.

5. A method for manufacturing a housing part (103, 105) for an arrangement according to any one of claims 1 or 2, **characterized in that**
a receptacle for a guide anchor (109, 111) and a receptacle for at least one additional means are manufactured in the same clamping operation.

## Revendications

1. Agencement comprenant une partie de boîtier (103), une seconde partie de boîtier (105), un premier ancrage de guidage (109), un second ancrage de guidage (111) et au moins un rail de guidage (115) ; dans lequel
les ancrages de guidage (109, 111) s'engagent positivement et de manière déplaçable dans le rail de guidage (115) ; et dans lequel
le premier ancrage de guidage (103) est fixé rigidement à la première partie de boîtier (103) et le second ancrage de guidage (111) est fixé rigidement à la seconde partie de boîtier (105) ; **caractérisé en ce que**
les ancrages de guidage (109, 111) absorbent au moins une partie de la force de poids du rail de guidage (115) et la transmettent dans les deux parties de boîtier (103, 105).

2. Agencement selon la revendication 1, **caractérisé par** exactement un rail de guidage (115).

3. Procédé de montage ou de démontage d'un agencement selon l'une des revendications 1 ou 2 ; avec les étapes consistant à
- fixer les ancrages de guidage (109, 111) à la partie de boîtier respective (103, 105) ;
- engager les ancrages de guidage (109, 111) avec le rail de guidage (115) ; et
- déplacer le premier ancrage de guidage (109) et/ou le second ancrage de guidage (111) dans le rail de guidage (115).

4. Procédé selon la revendication précédente, **caractérisé en ce que**
la première partie de boîtier (103) et/ou la seconde partie de boîtier (105) sont maintenues par un dispositif de levage ou de manutention.

5. Procédé de fabrication d'une partie de boîtier (103, 105) pour un agencement selon l'une des revendications 1 ou 2 ; **caractérisé en ce que**
un réceptacle pour un ancrage de guidage (109, 111) et un réceptacle pour au moins un autre moyen sont fabriqués dans le même serrage.
